# EUROPEAN PATENT APPLICATION

(11) **EP 4 439 809 A1**
(43) Date of publication of application: **02.10.2024**
(21) Application number: 23165242.1
(22) Date of filing: 29.03.2023
(51) Int. Cl.: H01M 50/107, H01M 4/66, H01M 4/70, H01M 50/533, H01M 10/04, H01M 10/0587, H01M 50/636, H01M 50/538, H01M 50/627

(54) **ELECTRODE FOR A CYLINDRICAL ELECTROCHEMICAL ENERGY STORAGE CELL**

(71) Applicant: Bayerische Motoren Werke Aktiengesellschaft, 80809 München (DE)
(72) Inventor: Jeong, Dongho, 85579 Neubiberg (DE)

(57) **Abstract**

An electrode (10) for a cylindrical electrochemical storage cell comprises a conductor foil (11) with an application area (12) and a contacting area (13) having conductive tabs (14). The contacting area (13) extends laterally along the application area (12) of the conductor foil (11). The conductive tabs (14) are arranged along the contacting area (13). Successive conductive tabs (14) are arranged at a distance from each other which increases or decreases along the contacting area (13).

## Description

### Field of disclosure

This disclosure relates to an electrode for an electrochemical energy storage cell and to an electrochemical energy storage cell, e.g., a cylindrical electrochemical energy storage cell.

### Background

Various types of battery cells are used as power sources in electric vehicles and energy storage applications. Some cell designs use a multi-layer stack where the cathode, anode and separators are rolled together (jelly roll) and have a cathode tab and an anode tab to connect to the positive and negative terminals of a cylindrical cell can. The battery tabs provide electrical connection between the multiple layers of the battery and an external target source, e.g., a battery electric vehicle. Tabs are metallic components, which are welded onto electrodes. For example, a cylindrical lithium-ion cell may use several different layers of chemical compounds to store energy. Sheet-like anodes, separators, and cathodes are sandwiched, rolled up to form a jelly roll, and packed into a cylinder-shaped can. Each of the cathode and anode electrodes uses conductive tabs to connect to the positive and negative terminals of the battery can.

More recently, cell design has been improved to use multiple pairs of opposing tabs along the electrodes, rather than just a single cathode and anode tab. With such a design, a maximum distance that electrons travel along the electrode is influenced by the height of the electrode rather than its length as in the case of conventional tabbed electrodes. Typically, the height of an electrode in a jelly roll is only 5 to 20 % of its length. As a result, the ohmic resistance, and thus the heat generated internally, can be significantly reduced. In addition, the current can be distributed more evenly across the electrode. This can improve battery life by avoiding localized hotspots of higher overpotentials that can otherwise cause unwanted chemical reactions.

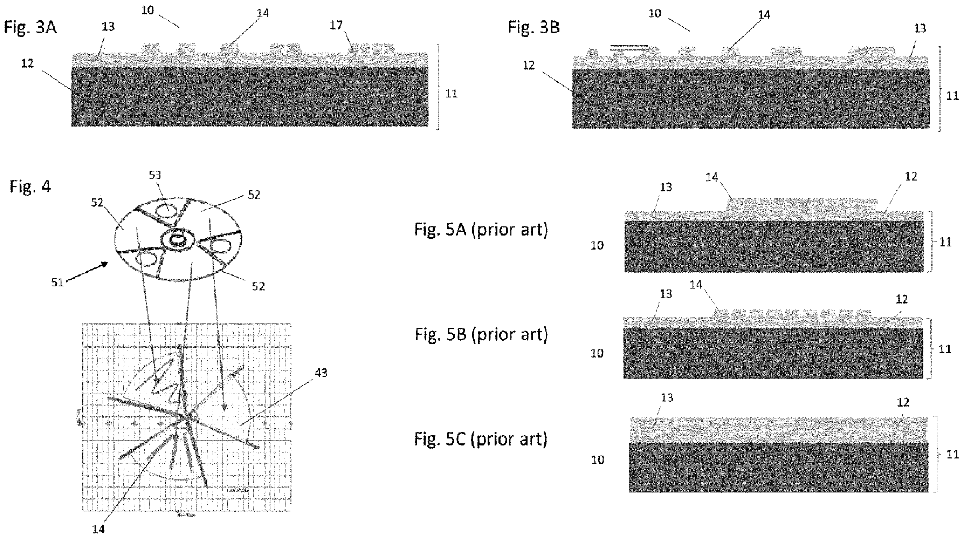

Various types of multi-tab designs have been proposed in the art (see Figures 5A to 5C). Figure 5A shows an electrode 10 (cathode or anode) with a conductor foil 11, which has an application area 12 and a contacting area 13. The contacting area 13 extends laterally along the application area 12 of the conductor foil 11. The conductor foil 11 has multiple conductive tabs 14 arranged along the length of the electrode layer. Each tab is in the shape of a parallelogram, which appears to be the most common tab design at present. However, in a cylindrical cell (e.g., when rolled into a jelly roll and packed into a cylindrical can) this design blocks the end faces of the jelly roll, which are important for electrolyte filling. In the production process of an electrochemical storage cell, it is necessary to saturate the electrode stack or coil with electrolyte after it has been placed in the housing, with a certain exposure time being necessary to ensure sufficient and uniform wetting of the inner porosity of the electrodes up to the interface.

Another tab design is shown in Figure 5B. In this design, each tab 14 is trapezoidal in shape, and may have the advantage of leaving gaps or 'valleys' between successive tabs. However, the tabs may still block the end faced of the jelly roll. Another tab design is shown in Figure 5C. In this embodiment, the conductive tabs have a continuous shape, which may have the advantage of easier processability due to fewer process steps involved during manufacture. However, the tabs can still block the end faces of the jelly roll, typically even more so than other designs.

The tab designs suggested by the prior art discussed above do not consider a welding area and possible blockage of an electrolyte filling path. This can result in poorer degassing and longer electrolyte filling time of energy storage cells, such as electrochemical energy storage cells.

It is an object to provide an electrode for an electrochemical energy storage cell, which has improved tab design to allow for improved electrochemical energy storage cells with better degassing properties and shorter electrolyte filling time.

These objectives are achieved by the subject matter of the independent claims. Further developments and embodiments are described in the dependent claims.

It is to be understood that any feature described in relation to any one embodiment may be used alone, or in combination with other features described herein, and may be used in combination with one or more features of any other of the embodiments, or any combination of any other of the embodiments unless described as an alternative. In addition, equivalents and modifications not described below may be used without departing from the scope of the electrode for an electrochemical energy storage cell and the electrochemical energy storage cell defined in the accompanying claims.

### Summary

The following relates to an improved concept in the field of battery cell technology. One aspect concerns an electrode with conductive tabs. The conductive tabs are arranged along a contacting area of a conductor foil. Successive conductive tabs are spaced apart by a distance which varies along the contacting area. For example, the conductive tabs are spaced apart such that, when rolled up into a rolled-up condition (i.e., a circular electrode coil or jelly roll), the conductive tabs are arranged in circular segments in relation to an end face of the coil. The circular segments of conductive tabs provide weldable areas, which can be welded to a contact plate of a cylindrical battery can, for example. In addition, the circular segments may leave open areas of the jelly roll, which can be used for electrolyte filling. This way the degassing issue including welding resistance and strength issues can be solved.

In at least one embodiment, an electrode for a cylindrical electrochemical storage cell comprises a conductor foil with an application area. Furthermore, the electrode comprises a contacting area having conductive tabs.

The contacting area extends laterally along the application area of the conductor foil. The conductive tabs are arranged along the contacting area. Successive conductive tabs are arranged at a distance from each other which increases or decreases along the contacting area.

In a rolled-up condition of the electrode, e.g., rolled up together with one or more additional layers to form a jelly roll of a battery, the conductive tabs are located at an end of the rolled-up condition electrode. The resulting roll has two end faces. The conductive tabs protrude from the end face(s). The distance between successive conductive tabs is a design parameter that determines where the tabs are in relation to the end face(s) of the jelly roll. Due to the distance between successive tabs space remains which can be used for electrolyte filling, for example.

The proposed electrode can be used to form a cylindrical electrochemical storage cell. The cylindrical cells may have contact plates to contact the cell. The conductive tabs are welded to the contact plate(s) to electrically connect to the positive and negative terminals of the battery can.

The design of conductive tabs involves a balance of contradicting effects. The larger contact area is required for lower resistance and higher strength, for example, but the required area eventually blocks the electrolyte filling paths, which can lead to gas trapping and lithium plating. The proposed electrode allows the contact area to be structured so that less surface area is required to weld to the contact plate. In fact, the conductive tabs can be spaced apart such that, when rolled into a jelly roll structure, the conductive tabs can be welded to circular segments of the contact plate(s). This way other segments of the cell can be free of welded connections to conductive tabs and can be used for electrolyte filling, for example.

This improved tab design provides better degassing properties. It also allows for shorter electrolyte filling times. The tab design can be balanced to meet desired resistance reduction and processability.

An electrochemical storage cell, e.g., a lithium-ion battery, has at least two different electrodes: a positive (cathode) and a negative electrode (anode). For use in electrochemical energy storage cells, the electrodes are typically in the form of an electrode stack or coil, with a separator for electrical insulation being arranged between each cathode and anode, for example. The electrochemical energy storage cell can be arranged to make energy available to consumers, for example consumers in a vehicle. Each of the electrodes has at least one active material, optionally together with additives such as electrode binders and electrical conductivity additives, applied to an electrically conductive carrier of the respective electrodes. For example, massive, non-porous and solid conductor foils made of aluminum (for the positive electrode), or copper (for the negative electrode) are used as electrically conductive carriers, which are also known as "solid foils". Conductor foils of this type are essentially impermeable to gases and liquid electrolyte.

The electrochemical energy storage cell can be a lithium-ion battery, so that this disclosure also relates to an electrode for a lithium-ion battery and a lithium-ion battery with such an electrode. In the following, the term "lithium-ion battery" is used synonymously for all terms commonly used in the prior art for lithium-containing galvanic elements and cells, such as lithium battery, lithium cell, lithium-ion cell, lithium polymer cell, lithium-ion battery cell and lithium-ion accumulator. Specifically, rechargeable batteries (secondary batteries) are included. The terms "battery" and "electrochemical cell" are also used synonymously with the terms "lithium-ion battery" and "lithium-ion cell". The lithium-ion battery can also be a solid-state battery, for example a ceramic or polymer-based solid-state battery.

The term "jelly roll" denotes a design used for many types of cylindrical rechargeable batteries. The name derives from the fact that the cross section of the battery looks like a Swiss roll. In a jelly roll a multilayer cell is laid down, e.g., an insulating sheet is laid down, then a thin layer of an anode material is laid down, a separator layer is applied, and a cathode material is layered on top. This sandwich is then rolled up into a circular electrode coil (denoted rolled-up condition) and inserted into a hollow cylinder housing or can, to form the electrochemical cell, or battery. The battery is sealed, metal contacts are attached, and an optional button top is applied.

In at least one embodiment, no electrode coating is applied in the contacting area. The contacting area, via the conductive tabs, is used to electrically connect the electrode to external contacts or current leads of an electrochemical storage cell having the electrode according to the improved concept.

In at least one embodiment, the electrode arrangement is a round electrode coil, a flat electrode coil or an electrode stack.

In at least one embodiment, the distance between successive conductive tabs gradually increases or decreases along the contacting area.

The distance between successive conductive tabs is one design parameter which determines the position of the tab in a rolled-up condition of the electrode, e.g., in relation to an end face of a jelly roll. For example, by gradually increasing or decreasing the distance between successive conductive tabs, the tabs can form segments on the end face(s) of a jelly roll type structure, or circular electrode coil. This way, there remains space to use for electrolyte filling, for example.

In at least one embodiment, the distance between successive conductive tabs is set to predetermined values such that, in a rolled-up condition of the electrode, the conductive tabs are arranged in, or limited by, circular segments in relation to an end face of the rolled-up electrode.

The conductive tabs become part of a coil when the electrode is rolled up, e.g., into a multi-layer jelly roll, to form a battery cell. If the tabs are a constant distance apart, the tabs will move outwards with each winding. The predetermined values, however, may account for this and place the tabs into the circular segments in relation to the end face of the rolled-up electrode. This way, the tabs form circular segments which can be welded to corresponding segments of a contact plate, e.g., of a cylindrical battery can. In addition, segments of the contact plate can be kept free of welding and, thus, can be used for electrolyte filling, e.g., by means of openings in the contact plate.

In at least one embodiment, at least some conductive tabs comprise subtabs. A greater width of a conductive tab makes it more difficult to bend the tab, e.g., for subsequent welding. For example, a tab can be divided into several subtabs, e.g., by means of a cut or a cut-out. Consequently, bending is easier.

In at least one embodiment, the conductive tabs have a predetermined width. The width of a conductive tab is a function of distance to a corresponding successive conductive tab. For example, if the electrode is rolled up in such a way that the tabs are arranged into circular segments of an end face, then the tabs can have greater width but still fit into a corresponding circular segment. This way, fewer but wider tabs may suffice to build the cell.

In at least one embodiment, the conductive tabs have a height. At least some conductive tabs have a height different from one or more successive conductive tabs. The smaller height of a conductive tab in the vicinity of closer successive tabs makes it more difficult to bend the tab, e.g., for welding. For example, a tab with a smaller height is easier to bend and may not interfere with closer tabs.

In at least one embodiment, at least some conductive tabs form groups of conductive tabs. Conductive tabs of a same group have essentially same geometry, e.g., including height, width, sub-tabs. Groups can be established by several successive conducting tabs. For example, if the resulting battery structure, such as the jelly roll, should have three circular segments for welding, then a group of conductive tabs may have three conductive tabs, respectively. This way, tabs of essentially same distance, in relation to the rolled-up condition, have a same geometry. A group of conductive tabs may be followed by another group of conductive tabs having a somewhat different geometry. For example, consider again three circular segments for welding, then a next group of conductive tabs may have three conductive tabs with greater width and/or different height, respectively. This way, the circular segments are formed by similar conductive tabs and a rough symmetry can be established.

Furthermore, a cylindrical electrochemical energy storage cell is suggested. The electrochemical storage cell can be a lithium-ion cell, for example.

In at least one embodiment, a cylindrical electrochemical energy storage cell comprising an electrode arrangement is arranged in a cylindrical housing. The electrode arrangement comprises an anode, a cathode and a separator arranged between the anode and the cathode, the anode and/or the cathode comprising an electrode according to any one of the preceding aspects.

In at least one embodiment, the electrode arrangement has two end faces and the contact area of the anode, or the cathode protrudes from one of the end faces of the electrode arrangement. The housing is closed by means of a contact plate which electrically contacts the protruding contacting area of the anode or the cathode.

The protruding contacting area of the anode or cathode is folded over, at least partially, in the direction of the end face.

In at least one embodiment, the contact plate has at least one access opening for filling the housing with electrolyte, e.g., a plurality of access openings.

In at least one embodiment, the anode and the cathode comprise an electrode according to one of the preceding aspects.

The following description of figures of example embodiments may further illustrate and explain aspects of the improved concept. Components and parts with the same structure and the same effect, respectively, appear with equivalent reference symbols. Insofar as components and parts correspond to one another in terms of their function in different figures, the description thereof is not necessarily repeated for each of the following figures.

### Brief description of the drawings:

In the Figures:
- Figure 1: shows an example embodiment of an electrode,
- Figure 2: shows an example embodiment of a cylindrical electrochemical energy storage cell,
- Figures 3A, 3B: show further example embodiments of an electrode,
- Figure 4: shows another example embodiment of an electrode, and
- Figures 5A to 5C: show prior art example embodiments of an electrode.

### Detailed description

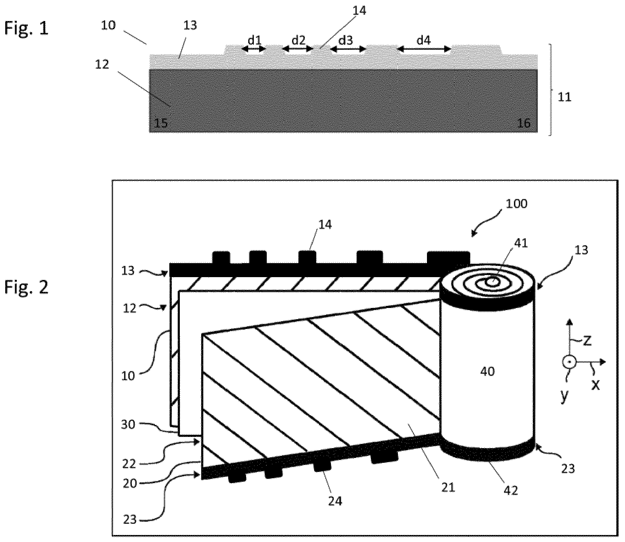

Figure 1 shows an example embodiment of an electrode. The drawing shows an electrode 10 in a top view. The electrode 10 includes a conductor foil 11, which has an application area 12 and a contacting area 13. For example, the conductor foil is an aluminum or copper foil. The contacting area 13 extends laterally along the application area 12 of the conductor foil 11.

An electrode coating is applied to the conductor foil 11 in the application area 13. The electrode coating comprises an electro-chemically active material, and typically an electrode binder and optional additives, for example an electrical conductivity additive. The nature of the electrochemically active material, the electrode binder, and the optional additives is not restricted, so that any electrode coatings known in the prior art that are suitable for an intended application of the electrode can be used.

The contacting area 12 runs laterally essentially along the entire length of the application area 13 and is adjacent to the application area 13. This shortens the transport length of the electrons passing through the electrode 10, e.g., when the electrode is operated in a battery cell. Shorter transport lengths reduce the resulting electrical resistance of the electrode so that excessive heating of the electrode and the formation of localized hotspots when operating the electrode can be reliably avoided.

The contacting area 13 is designed in the form of, or comprises, conductive tabs 14, which are arranged along the contacting area 13. Thus, the conductive tabs are essentially arranged laterally along the length of the application area and are adjacent to the application area 12. The conductive tabs can be described by their respective widths and heights. Furthermore, the conductive tabs are spaced apart by a distance.

In the drawing, a first end 15 of the electrode is shown at the left side. A second end 16 is shown at the right side. As an example, five conductive tabs 14 are depicted with distances d1, d2, d3 and d4, which gradually increase from the left to the right, such that d1 < d2 < d3 < d4. It should be noted that the number of conductive tabs on an electrode 10 is in no way limited to the five tabs shown in the drawing. In fact, the number of tabs implemented on an electrode can be freely chosen in view of the desired application and desired properties, e.g., spatial limitations of the battery can, resistance reduction and processability, etc.

In this embodiment, the distance between successive conductive tabs 14 is not constant, i.e., is increasing along the contacting area 12. In fact, the distances are gradually, or linearly, increasing (from the left 15 to the right end 16 in the drawing). In this embodiment, the conductive tabs 14 essentially have the same height. A width of respective conductive tabs, however, is not constant either and is gradually increasing as well (e.g., from the left end 15 to the right end 16). In fact, the widths of respective conductive tabs are increasing as the distance between successive conductive tabs is increasing.

Figure 2 shows an example embodiment of a cylindrical electrochemical energy storage cell. The schematic drawing shows a partially rolled up electrode arrangement 100 forming a jelly roll type cell. The partially rolled electrode arrangement comprises the previously described electrode 10 (see Figure 1), a counter-electrode 20 and a separator 30 which is disposed between the electrode 10 and the counter-electrode and electrically isolates the electrode 10 and the counter-electrode from each other. In the illustrated embodiment, the electrode is an anode, and the counter-electrode is a cathode. However, the electrode could be a cathode and the counter-electrode could be an anode. Similarly, the electrode arrangement could comprise a plurality of anodes and cathodes, each electrically isolated from the other by a separator.

Analogous to electrode 10, the counter-electrode 20 comprises a conductor foil 21 and includes a counter-electrode application area 22 and a counter-electrode contacting area 23. The counter-electrode contacting area may have conductive tabs 24. In this embodiment, the electrode arrangement is a circular electrode coil 40 and has a first end face 41 and a second end face 42. The contacting area 12 of the electrode 10, i.e., the anode, protrudes from the first end face, while the counter-electrode contacting area 23, i.e., the cathode, protrudes from the other second end face.

Heights and widths of and/or distances between conductive tabs 14, 24 are determined by the desired structure of the rolled-up electrode arrangement (rolled-up condition), e.g., circular electrode coil 40. Heights and widths of and/or distances are chosen such that, in the jelly roll, the conductive tabs form circular segments 43 at the first end face 41 and/or second end face 42 (see Figure 4). This way, the conductive tabs of a given circular segment are in close vicinity and can be welded to corresponding circular welding segments of a contact plate 51 of cylindrical housing.

The contacting area 13, 23 can be an integral part of the conductor foil 11, 21, which means that the contacting area is not subsequently attached to the application area 12, 22. Alternatively, however, it is also possible to attach the contacting area, e.g., the conductive tabs 14, 24, to the application area, for example by means of welding, before or after the application of an electrode coating to the application area.

Figures 3A and 3B show further example embodiments of an electrode. These examples are further developments of the electrode 10 shown in Figure 1. Figure 3A shows such an electrode, which also has conductive tabs 14 which comprise sub-tabs 17. The greater width of a conductive tab makes it more difficult to bend the tab, e.g., for welding. For example, a tab can be divided into several sub-tabs, e.g., by means of a cut or a cut-out. Consequently, bending is easier.

Figure 3B shows an electrode, which also has conductive tabs 14 of different height. The smaller width of a conductive tabs and closer successive tabs makes it more difficult to bend the tab, e.g., for welding. For example, a tab with a smaller height (indicated by dashed lines in the drawing) is easier to bend.

Figure 4 shows another example embodiment of an electrode. The drawing shows a contact plate 51 with three circular welding segments 52 and three openings 53. The circular welding segments are used to weld the conductive tabs from an end face 41, 42 of a circular electrode coil 40 (not shown, cf. Figure 2). The conductive tabs 14 form circular segments on the end faces. In the proposed design electrolyte filling is possible via the openings of the contact plate, while the conductive tabs 14 are arranged in the form of circular segments and are welded to the circular welding segments.

For easier manufacture it is also suggested to have a wider tab to account for electrode thickness tolerance in real production. Clustering of conductive tab widths helps to avoid production failure and increases production speed. For example, conductive tabs can be clustered, or grouped as discussed above. Ten categories clustering has been found to be beneficial in 46 mm diameters cells.

While this specification contains many details, these should not be construed as limitations on the scope of the disclosure or on what may be claimed, but rather as descriptions of features specific to example embodiments of the improved concept. Certain features described in this disclosure in connection with separate embodiments may also be implemented in combination in a single embodiment. Conversely, various features described in the context of a single embodiment may also be implemented separately or in any suitable sub-combination in multiple embodiments. Furthermore, although features may be described above as operating in example combinations and may even be initially claimed as such, in some cases one or more features of a claimed combination may be omitted from the combination and the claimed combination may be directed to a sub-combination or a variation of a sub-combination.

Similarly, although operations are shown in a particular order in the drawings, this should not be taken to imply that such operations must be carried out in the order shown, or in sequential order, or that all the operations shown must be carried out to achieve desirable results. In certain circumstances, multi-tasking and parallel processing may be advantageous.

Several implementations are described. However, various modifications may be made without departing from the spirit and scope of the disclosure. Accordingly, other implementations are within the scope of the claims.

### Reference numerals

- 10: electrode
- 11: conductor foil
- 12: application area
- 13: contacting area
- 14: conductive tab
- 15: first end of electrode
- 16: second end of electrode
- 17: sub-tab
- 20: a counter-electrode
- 21: counter-electrode conductor foil
- 22: counter-electrode application area
- 23: counter-electrode contacting area
- 24: counter-electrode conductive tabs
- 30: separator
- 40: circular electrode coil
- 41: first end face
- 42: second end face
- 43: circular segment
- 51: contact plate
- 52: circular welding segment
- 53: opening
- 100: electrode arrangement

## Claims

1. An electrode for a cylindrical electrochemical storage cell, the electrode comprising a conductor foil (11) with an application area (12) and a contacting area (13) having conductive tabs (14), wherein:
- the contacting area (13) extends laterally along the application area (12) of the conductor foil (11),
- the conductive tabs (14) are arranged along the contacting area (13), and
- successive conductive tabs (14) are arranged at a distance from each other which increases or decreases along the contacting area (13).

2. The electrode according to claim 1, wherein the distance between successive conductive tabs (14) gradually increases or decreases along the contacting area (13).

3. The electrode according to claim 1 or 2, wherein the distance between successive conductive tabs (14) is set to predetermined values such that, in a rolled-up condition of the electrode, the conductive tabs (14) are arranged in circular segments in relation to an end face of the rolled-up electrode.

4. The electrode according to one of claims 1 to 3, wherein at least some conductive tabs (14) comprise sub-tabs.

5. The electrode according to one of claims 1 to 4, wherein the conductive tabs (14) have a predetermined width and the width of a conductive tab (14) is a function of distance to a corresponding successive conductive tab (14).

6. The electrode according to one of claims 1 to 5, wherein the conductive tabs (14) have a height and at least some conductive tabs (14) have a height different from one or more successive conductive tabs (14).

7. The electrode according to one of claims 1 to 6, wherein
- at least some conductive tabs (14) form groups of conductive tabs (14), and
- groups of conductive tabs (14) have essentially same geometry, e.g., including height, width, sub-tabs.

8. A cylindrical electrochemical energy storage cell comprising an electrode arrangement (100) arranged in a cylindrical housing, the electrode arrangement (100) comprising an anode, a cathode and a separator arranged between the anode and the cathode, the anode and/or the cathode comprising an electrode (10) according to any one of the preceding claims.

9. The cell according to claim 8, wherein the electrode arrangement (100) has two end faces (41, 42) and the contact area of the anode, or the cathode protrudes from one of the end faces of the electrode arrangement, and wherein the housing is closed by means of a contact plate (51) which electrically contacts the protruding contacting areas of the anode or the cathode.

10. The cell according to claim 9, wherein the protruding contacting area of the anode or cathode is folded over at least partially in the direction of the end face (41, 42).

11. The cell according to one of claims 8 to 10, wherein the contact plate (51) has at least one access opening (53) for filling the housing with electrolyte, e.g., a plurality of access openings.

12. The cell according to one of claims 8 to 11, wherein the anode and the cathode comprise an electrode (10) according to any one of claims 1 to 7.
